# EUROPEAN PATENT APPLICATION

(11) **EP 3 117 798 A1**
(43) Date of publication of application: **18.01.2017**
(21) Application number: 16178104.2
(22) Date of filing: 06.07.2016
(51) Int. Cl.: A61D 3/00, A61G 13/10

(54) **TREATMENT TABLE**

(30) Priority: 17.07.2015 SE 1530111
(71) Applicant: Accesia AB, 302 31 Halmstad (SE)
(72) Inventor: Andersson, Susanne, 30231 Halmstad (SE); Cavalli, Johan, 30231 Halmstad (SE)
(74) Representative: Nilsson, Lennart

(57) **Abstract**

The present invention concerns a table for treatment comprising operations of different types of/on primarily small animals, e.g. dogs, cats, and so on, which has a working surface in the form of a table top, which is adjustable in at least the vertical direction and inclination and which has at least one collecting space at one or both ends of the table top, wherein the collecting space is situated under the surface of the table top and is coupled to an air/gas suction device via a device for the attenuation of primarily air noise and that the attenuation device is embodied as at least one box having noise attenuating means and an inlet, which is coupled to the collecting space, and an outlet, which is coupled to the device for the suction of air/gas through the collecting vessel to a facility for taking care of air/gas.

## Description

The present invention concerns a table for treatment comprising operations of different types of/on primarily small animals, e.g. dogs, cats, and so on, which has a working surface in the form of a table top, which is adjustable in at least the vertical direction and inclination and which has at least one collecting space at one or both ends of the table top.

Known tables of the above-mentioned type do not entirely meet today's veterinary medicine requirements or the requirements that are made of a safe and ergonomic working environment, and therefore a considerable need of improvements exists for assuring patient safety, animal ethical treatments, staff facilitation/improved ergonomics and staff security in anaesthesia treatments, which also facilitates the realisation of differrent treatment measures.

The task of providing for the above-mentioned needs forms the basis of the present invention.

This task is realised by the present invention by the fact that the collecting space of the table mentioned by way of introduction is situated under the surface of the table top and is coupled to an air/gas suction device for the evacuation of particularly used gases, e.g. anaesthetic gases, via a device for the attenuation of primarily air noise. The collecting space is provided with a removable vessel. The collecting space is provided with a lid having suitable transmitting openings, e.g. perforations. The attenuation device is embodied as at least one box having noise attenuating means and an inlet, which is coupled to the collecting space, and an outlet, which is coupled to the device for the suction of air/gas through the collecting vessel to a facility for taking care of air/gas. The noise attenuating means are embodied as fittings in the box in the form of material having noise attenuating properties placed at least on walls, floor, bottom, and ceiling. The box is provided with inner walls of noise attenuating material with the purpose of forcing the air/gas stream to change the direction. The walls are placed for the formation of a labyrinth for the air/gas stream. The table top is provided with a loop for the regulation of at least the temperature of the table top. The loop is embodied as a hose or a tube for a heating or cooling medium. The heating or cooling medium is water in order to form, in connection with the loop, a waterborne heating system, which is built-in in the table top.

By the present invention, an exceptionally versatile table is provided for the treatment of small animals, e.g. tooth operation of different types. By recessing the collecting space in the table top, the same becomes extraordinarily easy to work and easy to access and the proper patient becomes easy to reach for several treatment staff members. By the fact that the collecting space is coupled to an air/gas evacuation device, the working area becomes free from "used" gases. By the device for the attenuation of primarily air noise in connection with the air/gas flow through the collecting space, the working environment at the table is considerably improved. By the present invention, there is enabled an efficient temperature control of the table top and the surface thereof for adaptation to as suitable a temperature as possible for the patient to be treated. Thus, a major advantage of the invention is the possibility of efficient conducting away and efficient taking care of the "used gases" and then in particular anaesthetic gas, which today essentially is not taken care of with the obvious risk of treating staff being forced to inhale them. By the present invention, an extraordinarily efficient temperature control of the table top is enabled, which is of major advantage, since during anaesthesia, anaesthetized animals have to be supplied with heat and the temperature has to be held constant.

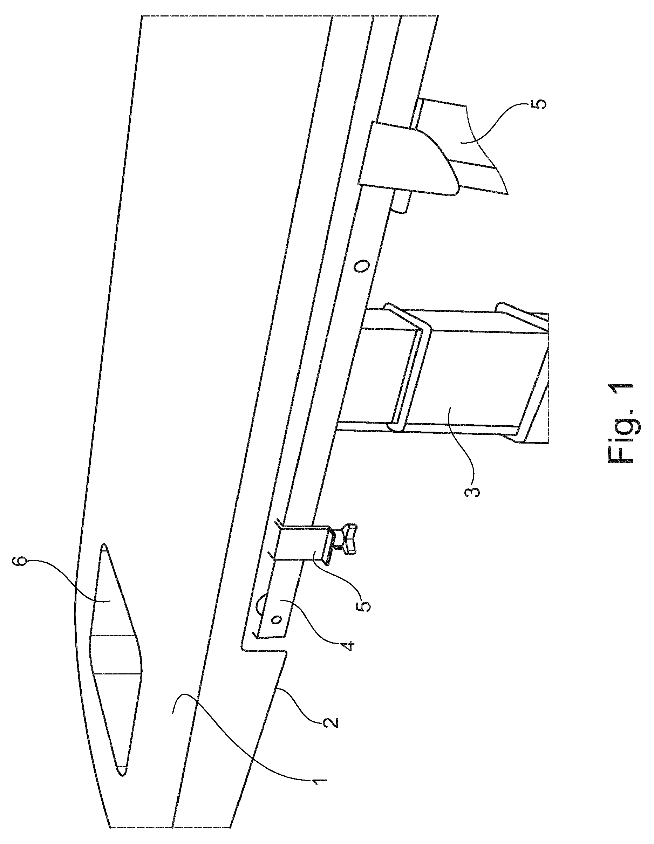

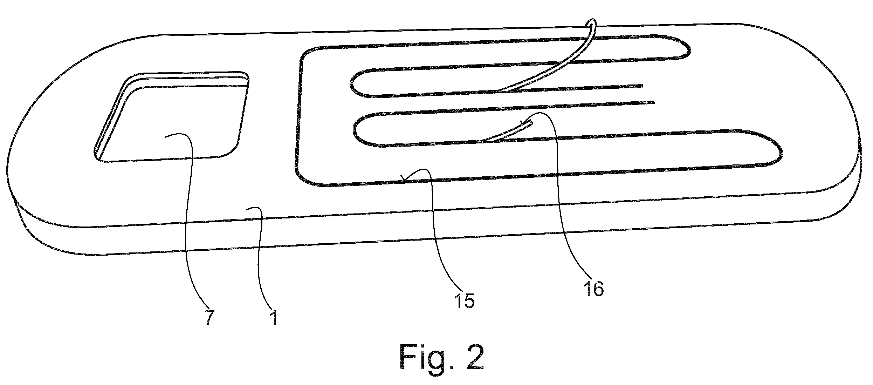

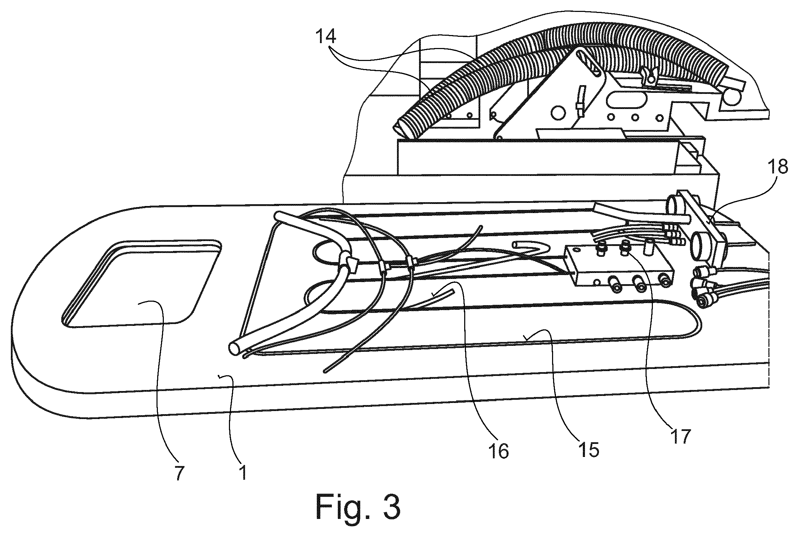

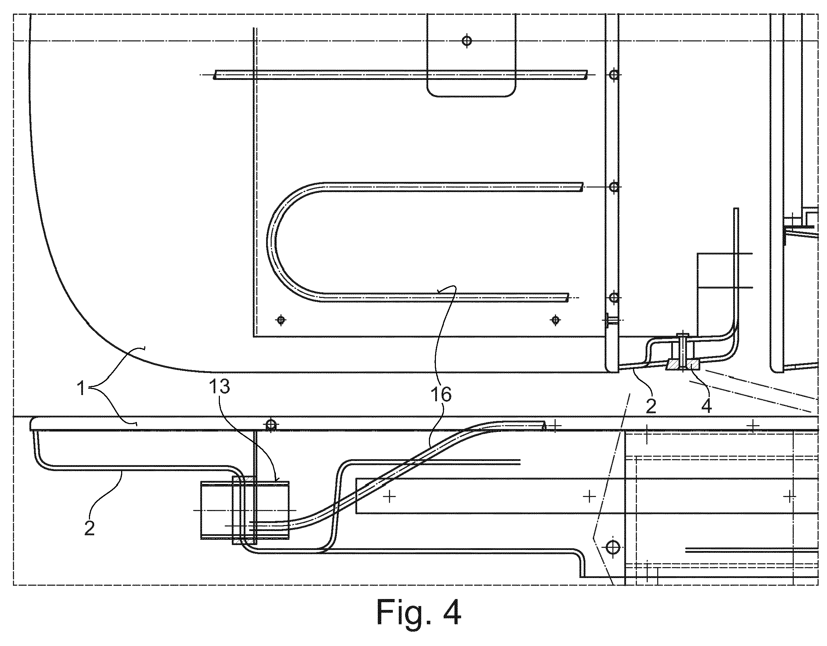

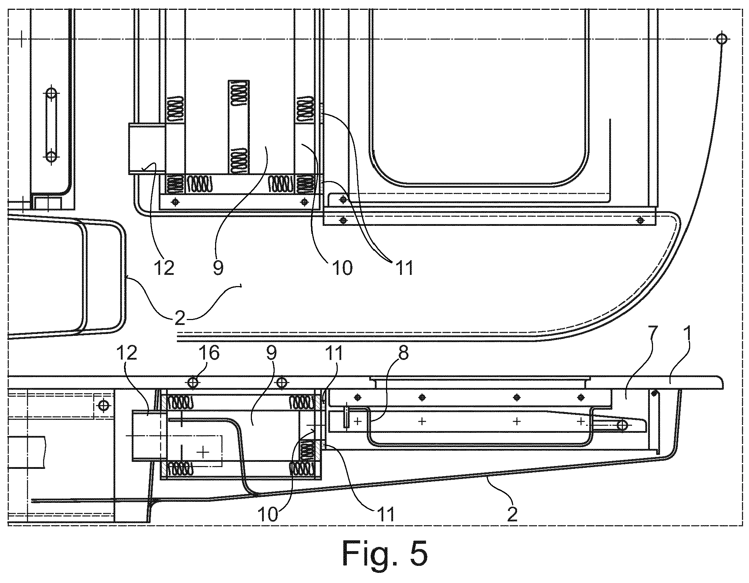

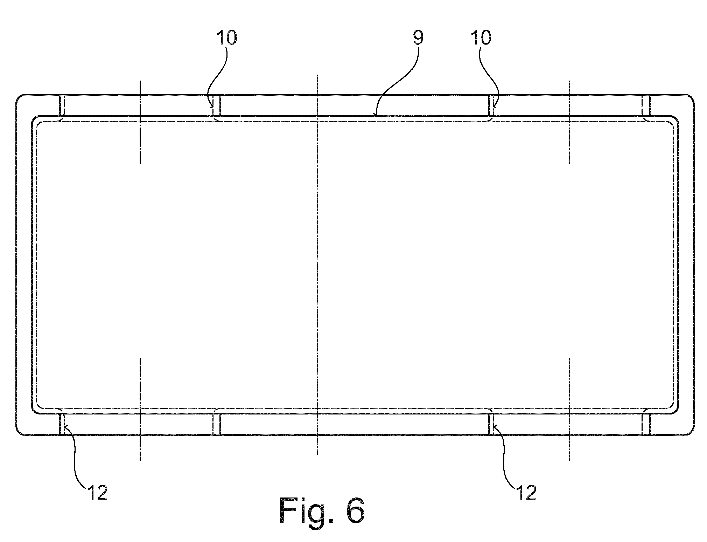

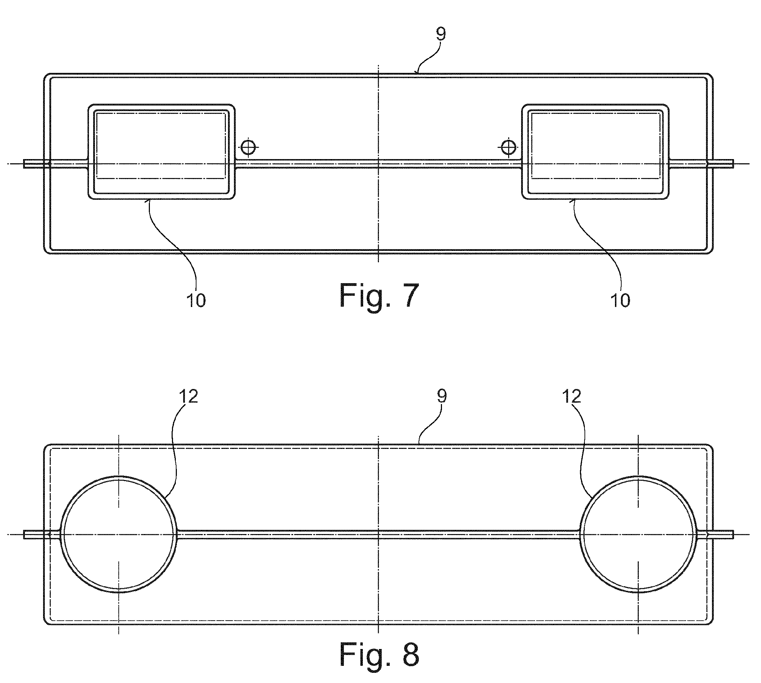

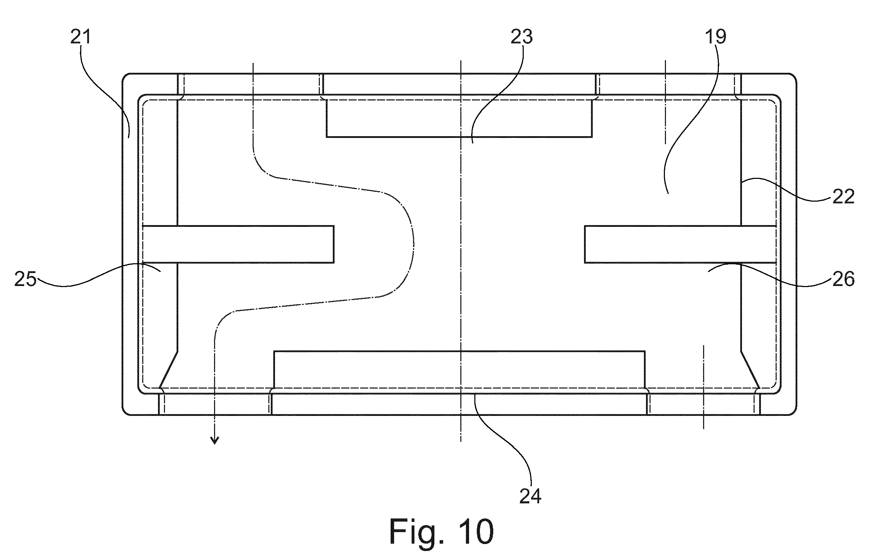

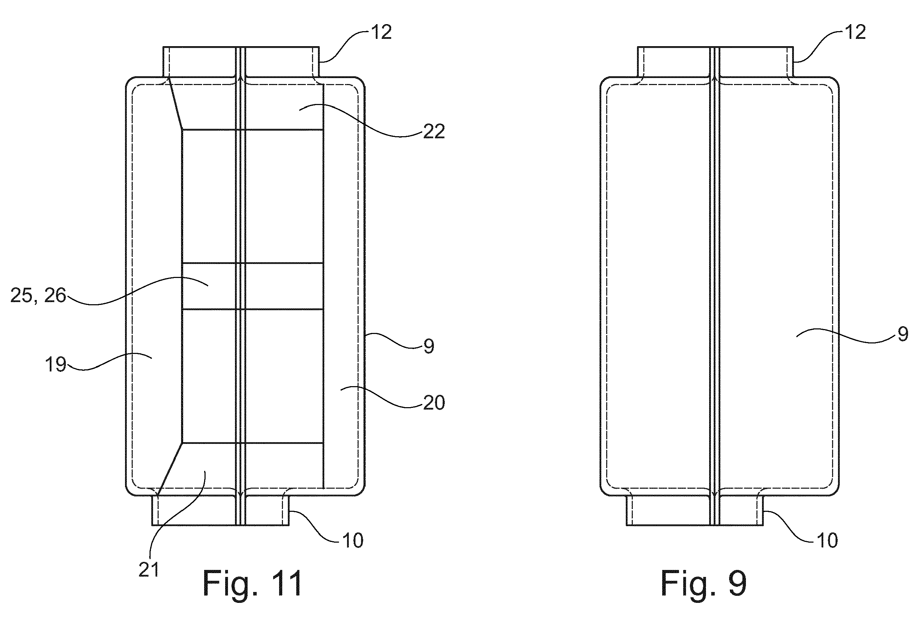

In the following, one embodiment of the present invention will be described in more detail, reference being made to the appended drawings. Fig. 1 shows a photographic view of a treatment table according to one embodiment of the present invention. Fig. 2 shows a photographic view of a part of the table shown in Fig. 1. Fig. 3 shows a photographic view of primarily the same part as in Fig. 2 but with a number of loosely placed accessories on top of the same. Fig. 4 shows a constructional drawing view of primarily one half of a part of the treatment table according to the present invention, a number of parts having been omitted for clarifying reasons, the upper view showing the part of the treatment table from above and the lower view shows the part of the treatment table from the side and wherein there is also shown a section through the table. Fig. 5 shows a constructional drawing view of the part of the treatment table according to the present invention being opposite in relation to the part shown in Fig. 4, a number of parts having been omitted for clarifying reasons as in Fig. 4, the upper view showing the part of the treatment table from above and the lower view shows the part of the treatment table from the side and wherein there is also shown a section through the table. Fig. 6 shows a constructional drawing view from above of a part removed from the treatment table according to the present invention. Fig. 7 shows a similar constructional drawing of the part in Fig. 6 in the direction from the edge shown at the top in Fig. 6. Fig. 8 shows a similar constructional drawing of the part in Figs. 6 and 7 in the direction from the edge shown at the bottom in Fig. 6. Fig. 9 shows an end view of the part shown in Figs. 6, 7, and 8. Fig. 10 shows a constructional drawing of the part shown in Fig. 6 provided with fittings according to the present invention indicated by solid lines. Fig. 11 shows a constructional end view of the part shown in Fig. 10 with the fittings indicated by solid lines.

The embodiment of the treatment table according to the present invention shown in the drawings has a table top 1, which is manufactured from a material suitable for the purpose and may be provided with a coating or a suitable surface. The corners of the table top 1 are smoothly rounded. The table top 1 is placed on a cup-shaped bottom part 2 for at least partly containment of parts of the treatment table situated underneath the table top 1. The bottom part 2 also conceals parts of a stand having, among other things, a pillar stand 3 for the regulation of the table top 1 vertically. In the stand, means are also included for the regulation of at least the inclination of the table top 1 at least longitudinally but possibly also laterally and possibly also simultaneously both longitudinally and laterally. The cup-shaped bottom part 2 is on one or both long sides provided with one or more rails 4 for the suspension of different accessories and working tools directly on the rail 4 or on attachments 5 adjustable and fixable along the rail 4. The stand 3 having different devices for the adjustment of the orientation of the table top vertically, longitudinally, and horizontally may be of a type known *per se* within this technical field and the proper operating devices are naturally positioned for suitable access by the treatment staff member or the treatment staff members, so that the orientation of the table top 1 is easy to adjust both before and during treatment of a patient. At one end of the table top 1, the end shown to the left in Fig. 1, there is an opening having a lid 6, which is provided with at least liquid-permeable openings, e.g. a perforation, and which is removable for the cleaning and access of a space 7 having a collecting vessel 8, which is easy to remove for emptying and cleaning.

Next to the space 7, there is arranged a sound or noise attenuator 9, which is shown in more detail in Figs. 6-11 and which has two inlets 10, which are coupled to the space 7 via one or more seals 11. The noise attenuator 9 has two outlets 12, which are coupled to table outlets 13 via a suitable hose 14 on each side of the pillar stand 3, which also may be denominated lift. The hose 14 is exemplified at the top in Fig. 3 and extends from the outlet 12 to the table outlet 13 inside the cup-shaped bottom part 2. The table outlets 14 are via hoses, not shown, connected to an evacuation facility of conventional kind for taking care of air and/or gas and then in particular used gases from the treatment area through the perforated lid 6, the space 7, the sound attenuator 9, and the hoses 14 for the discharge of the treatment area primarily from used gases, wherein anaesthetic gas is included. The sound attenuator 9 significantly reduces the noise from the air and/or gas flow through the treatment table, which contributes to an extraordinary working environment at the treatment table according to the present invention.

Underneath the table top 1, it is provided with a groove 15, which is milled in the table top 1 and which is intended for a hose 16, only a part of which is shown. The hose 16 is coupled to a suitable system for the supply of a heat controlling medium, which advantageously is water for the formation of a waterborne heating system. It may also be arranged for cooling the table top 2, so that a temperature suitable for patient and treatment staff can be maintained in the same and its nearest environment.

In Fig. 3, the table top 1 is shown from the underside, on which a number of accessories are placed for air and water. The box 17 may be intended for suction, water, air, and current, e.g. 24 V, and which may be placed on the rail 4 for easy access by the treatment staff. Furthermore, there is shown a unit 18 with the table outlets 14 and further connection possibilities for air, suction, water, and current. In addition, different hose arrangements are shown for possible location underneath the table top 1 inside the table casing 2.

The sound or noise attenuator 9 shown in Figs. 6-11 is embodied as a box having an upper half and a lower half and has two inlets 10 and two outlets 12. The inlets 10 are quadrangular and connect to the space 7 via a seal 11, while the outlets 12 are round and dimensionally fit to the hoses 14, which conduct air and/or gas to the table outlets 13. Fig. 6 shows the box from above, while Fig. 7 shows the box 9 from the space 7, Fig. 8 shows the opposite side of the box, and Fig. 9 shows the box from the end.

Fig. 10 shows the sound and noise attenuator 9 with fittings in the form of sheets 19-26 of a material having good noise attenuating properties, e.g. a foam plastic, which may have open or closed cells, wherein open cells afford a somewhat higher attenuation than closed cells. Primarily all surfaces in the box are covered by sheets of attenuating material. The sheets consist of a bottom sheet 19, a roof sheet 20, two side wall sheets 21 and 22, a front sheet 23, and a back sheet 24. Into the box, also a wall sheet 25 extends from one of the side wall sheets 21 and a wall sheet 26 from the other side wall sheet 22. The wall sheets 25 and 26 are situated principally right in front of the inlet 10 and thereby also the outlet 12, so that the traversing gas and/or air current cannot go straight through the box but is obstructed by the wall sheets 25 and 26, which thereby may be considered to create a labyrinth or at least a part of such a one.

It should be particularly emphasized that the table according to the present invention meets high ergonomic requirements by the fact that the table allows work to both right- and left-handed persons. The vertical adjustability facilitates a completely flexible work around the table and considerably increases ergonomics and efficiency. Further ergonomic and efficiency gains are achieved by the off centre location of the lift pillar, no "cords" on the floor, all connections of media at "the stern" as well as the round corners at above all the front edge, "the stem", of the table top 1. The table top 1 allows further ergonomic "achievements" by placing equipment on the rail 4, which may be a so-called ICU rail and which may be arranged on both long sides of the table top 1. The table top 1 allows housing of all connections for current, compressed air, water, and suction function by means of, among other things, the box 17.

Many modifications are naturally possible within the scope of the general idea of the invention defined in the subsequent claims.

## Claims

1. Table for treatment comprising operations of different types of/on primarily small animals, e.g. dogs, cats, and so on, which has a working surface in the form of a table top, which is adjustable in at least the vertical direction and inclination and which has at least one collecting space at one or both ends of the table top, **characterized in that** the collecting space is situated under the surface of the table top and is coupled to an air/gas suction device via a device for the attenuation of primarily (air) noise and that the attenuation device is embodied as at least one box having noise attenuating means and an inlet, which is coupled to the collecting space, and an outlet, which is coupled to the device for the suction of air/gas through the collecting vessel to a facility for taking care of air/gas.

2. Table according to claim 1, **characterized in that** the collecting space is provided with a removable vessel.

3. Table according to the claims 1 and 2, **characterized in that** the collecting space is provided with a lid having suitable transmitting openings, e.g. perforations.

4. Table according to claim 1, **characterized in that** the noise attenuating means is embodied as fittings in the box in the form of material having noise attenuating properties placed at least on walls, floor, bottom, and ceiling.

5. Table according to claim 4, **characterized in that** the box is provided with inner walls of noise attenuating material with the purpose of forcing the air/gas stream to change the direction.

6. Table according to claim 5, **characterized in that** the walls are placed for the formation of a labyrinth for the air/gas stream.

7. Table according to claim 1, **characterized in that** the table top is provided with a loop for the regulation of at least the temperature of the table top.

8. Table according to claim 7, **characterized in that** the loop is embodied as a hose or a tube for a heating or cooling medium.

9. Table according to claim 8, **characterized in that** the heating or cooling medium is, for instance, water in order to form, in connection with the loop, a waterborne heating system, which is built-in into the table top.
